(19) Europäisches Patentamt / European Patent Office / Office européen des brevets

(11) **EP 3 156 823 B1**

(12) **EUROPEAN PATENT SPECIFICATION**

(45) Date of publication and mention
of the grant of the patent:
**04.03.2020 Bulletin 2020/10**

(21) Application number: **14894615.5**

(22) Date of filing: **10.06.2014**

(51) Int Cl.:
*G01S 17/58* (2006.01)     *G01S 17/95* (2006.01)
*G01S 7/497* (2006.01)     *G01S 7/484* (2006.01)
*G01S 7/481* (2006.01)

(86) International application number:
**PCT/JP2014/065351**

(87) International publication number:
**WO 2015/189915 (17.12.2015 Gazette 2015/50)**

(54) **LASER RADAR DEVICE**

LASERRADARVORRICHTUNG

DISPOSITIF RADAR À LASER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.04.2017 Bulletin 2017/16**

(73) Proprietor: **Mitsubishi Electric Corporation
Chiyoda-ku
Tokyo 100-8310 (JP)**

(72) Inventors:
• **NISHIOKA, Junya
Tokyo 100-8310 (JP)**
• **HARAGUCHI, Eisuke
Tokyo 100-8310 (JP)**

• **ANDO, Toshiyuki
Tokyo 100-8310 (JP)**

(74) Representative: **Pfenning, Meinig & Partner mbB
Patent- und Rechtsanwälte
Theresienhöhe 11a
80339 München (DE)**

(56) References cited:
WO-A1-2013/094431     JP-A- H0 238 889
JP-A- H04 315 080     JP-A- S62 123 379
JP-A- 2000 193 558     JP-A- 2000 275 342
JP-A- 2007 003 305     JP-A- 2009 027 517
JP-A- 2010 151 806     JP-A- 2010 151 806
JP-A- 2011 185 773     US-A1- 2011 219 869

**Description**

TECHNICAL FIELD

The present invention relates to a laser radar device for measuring the moving speed of an observation target in space by emitting a single frequency laser beam into the space, and particularly to a laser radar device to be mounted on a moving body such as an aircraft.

BACKGROUND ART

Among laser radar devices for measuring the moving speed of an observation target from the Doppler shift of scattered light involved in the movement of the observation target in space (scattered light of a laser beam scattered by the observation target), demand for a laser radar device capable of remotely observing spatial distribution of wind speed or the like is high for services such as meteorological observation and meteorological forecast. In addition, there is demand for the laser radar device in various applications such as detection of turbulent air which affects air traffic safety and a survey of places suitable for wind power applications.

In particular, since the laser radar device mounted on an aircraft is able to detect clear-air turbulence ahead of the aircraft, the laser radar device can prevent the aircraft from entering the turbulence, which contributes to air traffic safety.

A laser radar device used for measuring the wind speed is referred to as a coherent Doppler lidar (CDL), and after emitting a single frequency laser beam into the atmosphere, the laser radar device detects the backscattered light of a laser beam backscattered by an observation target in the atmosphere by means of optical heterodyne (with regard to the wind measurement, aerosol is an observation target), thereby obtaining the moving speed of the observation target from the Doppler shift.

To ensure a sufficient speed measurement range in the CDL, it is necessary to carry out the frequency analysis of a broadband received signal. For example, a frequency analytic range required for measuring wind speeds in a range of plus or minus 30 m/s in the 1.5 $\mu$m wavelength band is 100 MHz.

According to the well-known sampling theorem, to reproduce a signal to a desired band, A/D (analog/digital) conversion needs to be applied to the signal at a sampling frequency two or more times the desired band, and thus a conventional CDL uses an A/D converter operating at the sampling frequency of about 200 mega-samples/s.

In addition, when the CDL is mounted on a moving body such as an aircraft, the Doppler shift frequency corresponding to the flight speed of the moving body is added to the wind measurement value of the wind speed, which makes it necessary to search a higher frequency range.

Accordingly, it is necessary to use an A/D converter operating at a higher sampling frequency, which leads to an increase in the cost of the laser radar device.

To obviate the necessity for the A/D converter operating at a high sampling frequency, the following Patent Document 1 discloses a laser radar device that comprises a voltage controlled oscillator (VCO) for generating a signal with the frequency equal to the Doppler shift frequency corresponding to the flight speed of a moving body, which is contained in the received signal of an optical heterodyne receiver, wherein a mixer mixes the signal generated by the VCO with the received signal of the optical heterodyne receiver to detect the difference frequency component of the signals, thereby canceling the Doppler shift frequency corresponding to the flight speed of the moving body.

This enables the laser radar device to detect the moving speed of the observation target without using the A/D converter operating at a high sampling frequency.

In addition, the following Patent Document 2 proposes a technique for correcting the flight speed component of a moving body with constitution in which a VCO with a narrow fractional bandwidth is used, considering the feasibility and availability of the VCO.

CITATION LIST

PATENT LITERATURE

Patent Document 1: Japanese Patent Laid-Open No. 1-114774/1989 (FIG. 1).
Patent Document 2: Japanese Patent Laid-Open No. 2003-240852 (Paragraph No. [0006] and FIG. 1).

## SUMMARY OF INVENTION

### TECHNICAL PROBLEM

With the foregoing constitution, the conventional laser radar device can obviate the necessity for the A/D converter operating at a high sampling frequency as long as it comprises the VCO for generating the signal with the frequency equal to the Doppler shift frequency corresponding to the flight speed of the moving body. However, the fundamental and harmonics of the signal oscillated by the VCO leak into the output side of the mixer, and spike noise can appear on a frequency spectrum obtained from the received signal of the optical heterodyne receiver, so that there is a problem of deteriorating the measurement accuracy of the moving speed of the observation target.

In addition, there are some cases where difference frequency components between the harmonic components of the VCO and the received signal of the optical heterodyne receiver appear on a frequency spectrum as a spurious peak, and the spurious peak offers a problem of further deteriorating the measurement accuracy of the moving speed of the observation target.

Incidentally, since the spurious signals such as spike noise and a spurious peak can be a deterioration factor of the measurement accuracy of the moving speed of the observation target, the conventional laser radar device is supposed to be designed by paying attention to the output of the VCO, the dynamic range of the mixer and characteristics of a bandpass filter. However, since the signal level of the received signal of the laser radar device is low in general, even if the laser radar device is attentively designed, it is difficult to exclude the influence of the spike noise or spurious peak completely. Accordingly, it is necessary to execute signal processing after the frequency analysis such as limiting processing of a speed detection range and excluding processing of a fixed noise peak frequency. Accordingly, it is conceivable that this leads to the complication of the laser radar device, an increase in cost, and reduction in data reliability.

The present invention is implemented to solve the foregoing problems. Therefore it is an object of the present invention to provide a laser radar device that can cancel out the Doppler shift frequency corresponding to the moving speed of the moving body without employing the VCO and improve the measurement accuracy of the moving speed of the observation target.

### SOLUTION TO PROBLEMS

A laser radar device comprising: a light source to oscillate transmitted seed light; a speed measuring unit to measure a speed of a moving body in which the own device is mounted; a sawtooth wave generator to generate a sawtooth wave with a period corresponding to a difference between a preset frequency and a Doppler shift frequency corresponding to the speed measured by the speed measuring unit; a pulse signal generator to generate a pulse signal repeatedly; a sawtooth wave cutting-out unit to output the sawtooth wave generated by the sawtooth generator only in a period during which the pulse signal generator generates the pulse signal; a phase modulator to shift a frequency of the transmitted seed light by performing phase modulation of the transmitted seed light in accordance with the sawtooth wave provided by the sawtooth wave cutting-out unit; a pulse modulator to output pulsed light by performing pulse modulation of the transmitted seed light in accordance with the pulse signal generated by the pulse signal generator; an optical antenna to emit the pulsed light which is the transmitted seed light whose frequency is shifted by the phase modulator, the transmitted seed light being pulse-modulated by the pulse modulator, into space, and thereafter to receive backscattered light of the pulsed light, which is backscattered by an observation target in the space; an optical heterodyne receiver to mix the backscattered light received by the optical antenna with the transmitted seed light oscillated by the light source, and to output a beat signal with a difference frequency between the backscattered light and the transmitted seed light; and a moving speed calculator to calculate a moving speed of the observation target from the beat signal output from the optical heterodyne receiver.

### ADVANTAGEOUS EFFECTS OF INVENTION

According to the present invention, the laser radar device is configured to include the speed measuring unit to measure the speed of the moving body in which the own device is mounted; the sawtooth wave generator to generate a sawtooth wave in the period corresponding to the speed measured by the speed measuring unit; a pulse signal generator to generate the pulse signal repeatedly; the sawtooth wave cutting-out unit to output the sawtooth wave generated by the sawtooth generator only in the period during which the pulse signal generator generates the pulse signal; the phase modulator to shift the frequency of the transmitted seed light by performing phase modulation of the transmitted seed light in accordance with the sawtooth wave provided by the sawtooth wave cutting-out unit; the pulse modulator to output pulsed light by performing pulse modulation of the transmitted seed light in accordance with the pulse signal generated by the pulse signal generator; the optical antenna to emit the pulsed light which is the transmitted seed light whose frequency is shifted by the phase modulator, the transmitted seed light being pulse-modulated by the pulse modulator, into the space, and thereafter to receive backscattered light of the pulsed light, which is backscattered by an observation target existed in the space; the optical heterodyne receiver to mix the backscattered light received by the optical antenna with the transmitted seed light oscillated by the light source, and to output a beat signal with a difference frequency between the backscattered light and the transmitted seed light; and the moving speed calculator to calculate the moving speed of the observation target from the beat signal output from the optical heterodyne receiver, and the optical heterodyne receiver is configured to mix the backscattered light received by the optical antenna with the transmitted seed light oscillated by the light source and output the beat signal with the difference frequency between the backscattered light and the transmitted seed light to the moving speed calculator, so that the Doppler shift frequency corresponding to the moving speed of the moving body can be cancelled out without using the VCO. As a result, it offers an advantage of being able to improve the measurement accuracy of the moving speed of the observation target.

BRIEF DESCRIPTION OF DRAWINGS

FIG. 1 is a block diagram showing a configuration of a laser radar device of an embodiment 1 in accordance with the present invention;
FIG. 2 is a block diagram showing a configuration of the optical transmitter unit 1 of the laser radar device of the embodiment 1 in accordance with the present invention;
FIG. 3 is a block diagram showing a detailed configuration of the own-machine speed information output unit 22 in the sawtooth wave generator unit 21 of FIG. 2;
FIG. 4 is a diagram illustrating a waveform example of a driving signal (sawtooth wave WF02 with a period T) which is a control signal for the optical phase modulator 24, and of a beat signal acquired by the optical heterodyne receiver 8;
FIG. 5 is a diagram illustrating relationships between transmitted light, received light and an optical heterodyne signal spectrum in the embodiment 1 in accordance with the present invention;
FIG. 6 is a block diagram showing a configuration of an optical transmitter unit 1 of a laser radar device of an embodiment 2 in accordance with the present invention;
FIG. 7 is a diagram illustrating relationships between the transmitted light, the received light and the optical heterodyne signal spectrum when the extinction characteristic during a pulse OFF period by the optical intensity modulator 26 is not ideal;
FIG. 8 is a diagram illustrating relationships between the transmitted light, the received light and the optical heterodyne signal spectrum when the optical intensity modulators 26 and 27 are driven synchronously;
FIG. 9 is a block diagram showing a configuration of the optical transmitter unit 1 of the laser radar device of an embodiment 3 in accordance with the present invention; and
FIG. 10 is a diagram illustrating relationships between the transmitted light, the received light and the optical heterodyne signal spectrum in the embodiment 3 in accordance with the present invention.

DESCRIPTION OF EMBODIMENTS

The best mode for carrying out the invention will now be described with reference to the accompanying drawings to explain the present invention in more detail.

EMBODIMENT 1

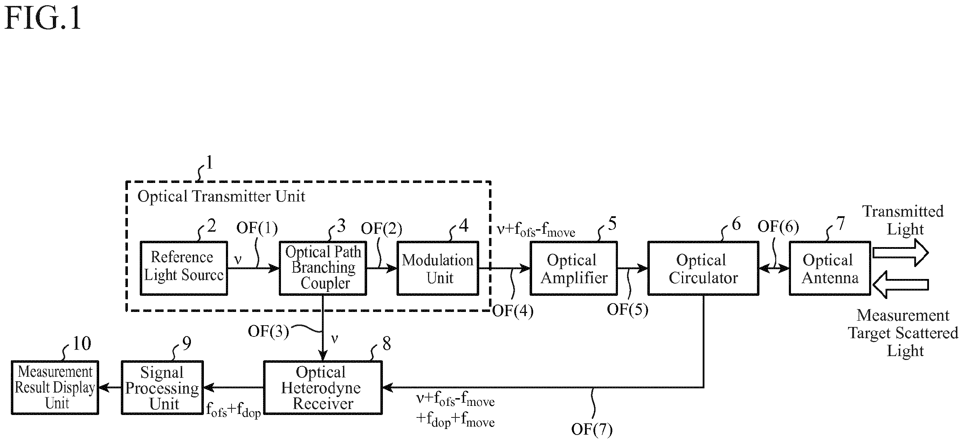

FIG. 1 is a block diagram showing a configuration of a laser radar device of an embodiment 1 in accordance with the present invention.
It is assumed in the present embodiment 1 that the laser radar device of FIG. 1 is mounted on a moving body such as an aircraft.
In FIG. 1, the optical transmitter unit 1 is a unit which is comprised of a reference light source 2, an optical path branching coupler 3 and a modulation unit 4, and which outputs pulsed light and local oscillation light.
The reference light source 2 continuously oscillates transmitted seed light with a single frequency $\nu$ (single wavelength) and outputs the transmitted seed light to an optical path OF(1) at fixed polarization.
The optical path branching coupler 3 is an optical component which divides the transmitted seed light with frequency $\nu$ output from the reference light source 2 into two parts, and outputs a first part of the transmitted seed light to an optical path OF (2) and a second part thereof to an optical path OF (3) as local oscillation light with the frequency $\nu$.
The modulation unit 4 gives to the frequency $\nu$ of the transmitted seed light output from the optical path branching coupler 3 a frequency ($f_{ofs}$ - $f_{move}$) resulting from subtracting a Doppler shift frequency $f_{move}$ corresponding to the speed of the moving body (moving body equipped with the laser radar device) from an offset frequency $f_{ofs}$ which is a preset frequency, performs pulse modulation of the transmitted seed light with a frequency ($v + f_{ofs} - f_{move}$), and outputs the pulsed light to an optical path OF (4). Incidentally, the modulation unit 4 constitutes a pulsed light output unit.

An optical amplifier 5 amplifies the pulsed light output from the modulation unit 4 and outputs the pulsed light after the amplification to an optical path OF(5).

An optical circulator 6 outputs the pulsed light amplified through the optical amplifier 5 to an optical antenna 7 via an optical path OF (6), and outputs the backscattered light received by the optical antenna 7 to an optical path OF(7).

The optical antenna 7 emits the pulsed light supplied from the optical circulator 6 into space, and receives the backscattered light of the pulsed light backscattered by the observation target present in the space (for example, when the laser radar device of FIG. 1 is used as a wind measurement lidar, aerosol that moves at the same speed as the wind speed is an observation target).

Incidentally, the frequency of the backscattered light is a frequency provided by adding the Doppler shift frequency $f_{dop}$ corresponding to the moving speed (wind speed, for example) of the observation target and the Doppler shift frequency $f_{move}$ corresponding to the speed of the moving body, to the frequency ($v + f_{ofs} - f_{move}$) of the pulsed light emitted from the optical antenna 7.

The optical heterodyne receiver 8 optically mixes the backscattered light with a frequency ($v + f_{ofs} + f_{dop}$) received by the optical antenna 7 and the local oscillation light with the frequency $v$ output from the optical path branching coupler 3, obtains the beat signal with a difference frequency ($f_{ofs} + f_{dop}$) between the backscattered light and the local oscillation light, carries out photoelectric conversion of the beat signal, and outputs the beat signal which is an electric signal to a signal processing unit 9.

The signal processing unit 9, which is comprised of a semiconductor integrated circuit with a built-in CPU or of a one-chip microcomputer, executes the processing of calculating the moving speed of the observation target by analyzing the frequency of the beat signal output from the optical heterodyne receiver 8. The signal processing unit 9 constitutes a moving speed calculating unit.

More specifically, the signal processing unit 9 executes the processing of carrying out the AD conversion of the beat signal output from the optical heterodyne receiver 8 at a prescribed sampling rate; dividing the beat signal which is a digital signal for each receiving gate width corresponding to the pulse width of the pulsed light output from the modulation unit 4; and calculating a power spectrum by performing Fast Fourier Transform on the beat signal after the division.

In addition, the signal processing unit 9 executes the processing of calculating the peak value, spectral width, SNR (Signal Noise Ratio) and the like in the power spectrum of the beat signal for each receiving gate width; and calculating the moving speed of the observation target from the peak value of the power spectrum.

Incidentally, the signal processing unit 9 has a function of outputting a command value in a radial direction (radial direction of the pulsed light) to the optical antenna 7. Storing the distance to the observation target and a measured value of wind speed for each radial direction obtained in accordance with the command value makes it possible to estimate three-dimensional distribution of the wind speed by a vector operation, and to calculate wind direction and speed distribution for each observed distance.

A measurement result display unit 10 is comprised of a GPU (Graphics Processing Unit), liquid crystal display or the like, and for example, displays the moving speed of the observation target estimated by the signal processing unit 9 and the three-dimensional distribution of the wind speed.

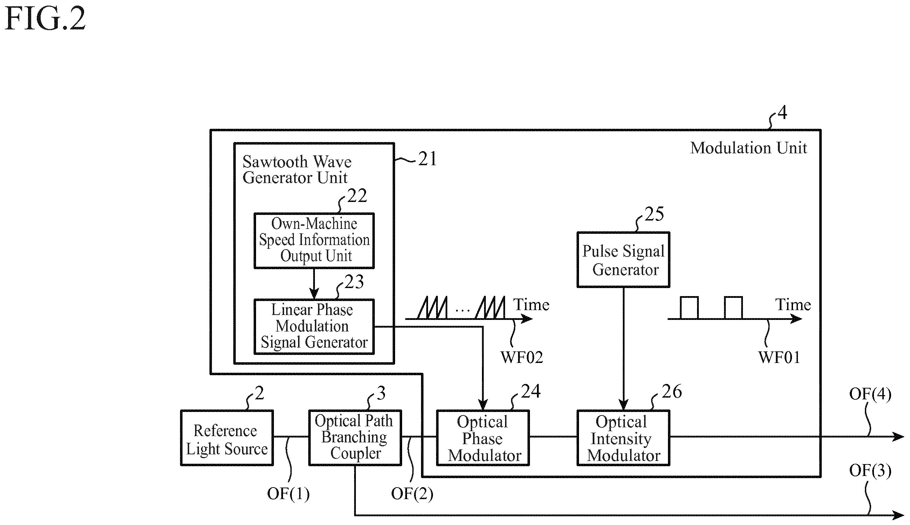

FIG. 2 is a block diagram showing a configuration of the optical transmitter unit 1 of the laser radar device of the embodiment 1 in accordance with the present invention.

A sawtooth wave generator unit 21 is a device which is comprised of an own-machine speed information output unit 22 and a linear phase modulation signal generator 23, and which generates a sawtooth wave with a period corresponding to the speed of the moving body in which the own-device is mounted.

The own-machine speed information output unit 22 executes the processing of outputting a period T of the sawtooth wave corresponding to the speed of the moving body equipped with the own-device.

The linear phase modulation signal generator 23 is comprised of a function generator or an arbitrary waveform generator, and executes the processing of generating the sawtooth wave WF02 with the period T output from the own-machine speed information output unit 22. More specifically, the linear phase modulation signal generator 23 executes the processing of driving the optical phase modulator 24 by the sawtooth wave WF02 with the period T to achieve a modulation phase 2n (360 degrees) by the optical phase modulator 24.

Here, the sawtooth wave WF02 with the period T has the amplitude of $2mV\pi$ equal to an integer multiple (m times) of the driving voltage 2Vn necessary for achieving the modulation phase 2n (360 degrees) by the optical phase modulator 24.

Incidentally, the linear phase modulation signal generator 23 constitutes a sawtooth wave generating unit.

The optical phase modulator 24 executes the processing of carrying out the phase modulation of the transmitted seed light with frequency $v$ output from the optical path branching coupler 3 in accordance with the sawtooth wave WF02 generated by the linear phase modulation signal generator 23 so as to shift the frequency of the transmitted seed light, and outputs the transmitted seed light with the frequency ($v + f_{ofs} - f_{move}$) to the optical intensity modulator 26. Incidentally, the optical phase modulator 24 constitutes a phase modulation unit.

A pulse signal generator 25 executes the processing of generating the pulse-phase modulation driving signal WF01 (repeatedly generating a pulse signal) necessary for the transmitted light of a pulse-type laser radar device. Incidentally, the pulse signal generator 25 constitutes a pulse signal generating unit.

An optical intensity modulator 26 is comprised of an intensity modulator such as a Mach-Zehnder LN modulator and an EA (Electro Absorption) modulator, or of an optical amplifier such as a semiconductor optical amplifier or an optical fiber amplifier, or of an optical switch such as an MEMS optical switch; and executes the processing of carrying out the pulse modulation of the transmitted seed light with the frequency ($v + f_{ofs} - f_{move}$) output from the optical phase modulator 24 in accordance with the pulse-phase modulation driving signal WF01 generated by the pulse signal generator 25, and outputs the pulsed light to an optical path OF(4). Incidentally, the optical intensity modulator 26 constitutes a pulse modulation unit.

Although an example in which the optical intensity modulator 26 is comprised of a Mach-Zehnder LN modulator or the like is shown here, whichever unit can be used as long as it can respond to a pulse width of 100 nsec to 1 $\mu$sec and to a repeated frequency approximately ranging from several to several tens of kilohertz, which are necessary for the laser radar device.

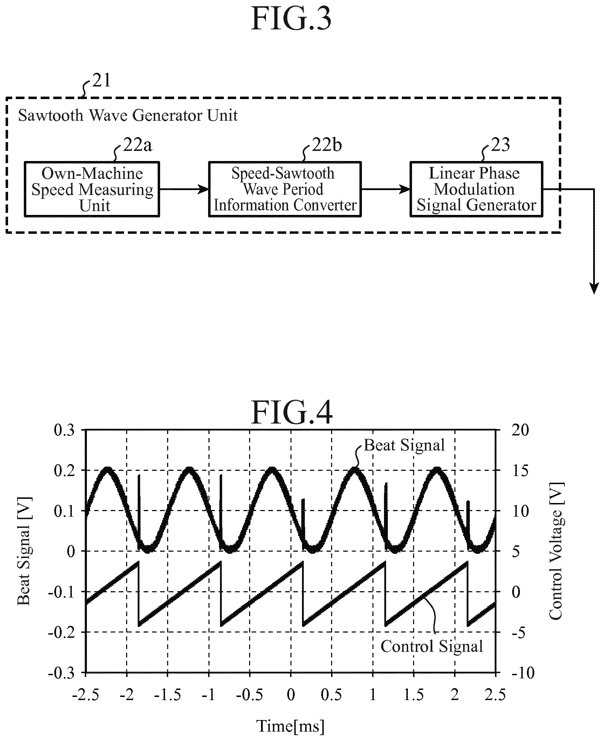

FIG. 3 is a block diagram showing a detailed configuration of the own-machine speed information output unit 22 in the sawtooth wave generator unit 21 of FIG. 2.

In FIG. 3, the own-machine speed measuring unit 22a executes the processing of measuring the speed of the moving body equipped with the own-device . As for the own-machine speed measuring unit 22a, it can be an instrument capable of fully measuring the speed of the moving body (about 3000 km/h) numerically, and it is conceivable to use an instrument such as an airspeed indicator mounted on an aircraft. Incidentally, the own-machine speed measuring unit 22a constitutes a speed measuring unit.

The speed-sawtooth wave period information converter 22b executes the processing of outputting the period T of the sawtooth wave corresponding to the speed of the moving body measured by the own-machine speed measuring unit 22a.

Next, the operation will be described.

The reference light source 2 continuously oscillates the transmitted seed light with the single frequency $v$, and outputs the transmitted seed light to the optical path OF(1) at fixed polarization.

Receiving the transmitted seed light with frequency $v$ from the reference light source 2, the optical path branching coupler 3 divides the transmitted seed light into two parts while maintaining the polarization of the transmitted seed light, and outputs the first transmitted seed light to the optical path OF (2), and the second transmitted seed light to the optical path OF(3) as the local oscillation light with frequency $v$.

Receiving the transmitted seed light with frequency $v$ from the optical path branching coupler 3, the modulation unit 4 gives to the frequency $v$ of the transmitted seed light the frequency ($f_{ofs} - f_{move}$) obtained by subtracting the Doppler shift frequency $f_{move}$ corresponding to the speed of the moving body (moving body equipped with the laser radar device) from the offset frequency $f_{ofs}$ which is the preset frequency, carries out the pulse modulation of the transmitted seed light with the frequency ($v + f_{ofs} - f_{move}$), and outputs the pulsed light to the optical path OF(4).

When the laser radar device is used as a wind measurement lidar, the frequency $v$ of the transmitted seed light is set at about 195 THz, the offset frequency $f_{ofs}$ is set at 10 MHz to several hundred MHz, and the pulse width of the pulsed light is set at several hundred nsec to 1 $\mu$sec, for example.

The processing contents of the modulation unit 4 will be described concretely below.

The own-machine speed measuring unit 22a of the sawtooth wave generator unit 21 measures the speed of the moving body equipped with the own-device, and outputs the speed of the moving body to the speed-sawtooth wave period information converter 22b.

The speed-sawtooth wave period information converter 22b keeps a table showing correspondence between the speed of the moving body and the period T of the sawtooth wave in advance, and when it receives the speed of the moving body from the own-machine speed measuring unit 22a, it refers to the table to obtain the period T of the sawtooth wave corresponding to the speed of the moving body, and outputs the period T of the sawtooth wave to the linear phase modulation signal generator 23.

Although an example is shown in which the speed-sawtooth wave period information converter 22b has the table showing the correspondence between the speed of the moving body and the period T of the sawtooth wave in advance, this is not essential. For example, a configuration is also possible which uses a function giving the correspondence between the speed of the moving body and the period T of the sawtooth wave, and calculates the period T of the sawtooth wave from the speed of the moving body.

Receiving the period T of the sawtooth wave from the speed-sawtooth wave period information converter 22b, the linear phase modulation signal generator 23 generates the sawtooth wave WF02 with the period T with amplitude $2mV\pi$ corresponding to the integer multiple (m times) of the driving voltage 2Vn of the optical phase modulator 24 to achieve the modulation phase 2π (360 degrees) by the post-stage optical phase modulator 24.

When the linear phase modulation signal generator 23 generates the sawtooth wave WF02, the optical phase modulator 24 carries out the phase modulation of the transmitted seed light with frequency ν output from the optical path branching coupler 3 in accordance with the sawtooth wave WF02 so as to shift the frequency of the transmitted seed light, and outputs the transmitted seed light with frequency $(\nu + f_{ofs} - f_{move})$ to the optical intensity modulator 26.

Here, the phase φ(t) of the transmitted seed light with the frequency $(\nu + f_{ofs} - f_{move})$ output from the optical phase modulator 24 varies at a fixed rate of change 2mπ/T [rad/s] with respect to time t as shown by the following Expression (1).

$$\emptyset(t) = \frac{2m\pi}{T} \bmod(t, T) \qquad (1)$$

In Expression (1), mod(t,T) represents a remainder when dividing the time t by the period T of the sawtooth wave.

The frequency f for the phase φ(t) can be defined by the time derivative of the phase φ as shown by the following Expression (2).

$$f = \frac{1}{2\pi} \frac{d}{dt} \emptyset(t) \qquad (2)$$

Since the rate of change of the phase φ (t) is 2mπ/T [rad/s], the optical phase modulator 24 can achieve the frequency shift $(f_{ofs} - f_{move})$ proportional to the reciprocal of the period T of the sawtooth wave.

FIG. 4 is a diagram illustrating a waveform example of the driving signal (the sawtooth wave WF02 with the period T) which is a control signal to the optical phase modulator 24, and of the beat signal obtained by the optical heterodyne receiver 8.

The example of FIG. 4 shows a driving signal for achieving the frequency shift $(f_{ofs} - f_{move})$ of 1 kHz, and the driving signal is a sawtooth wave with the amplitude of 7 V (2Vπ voltage (360 degrees)) and the period T of 1 msec.

In this case, as shown in FIG. 4, the beat signal obtained by the optical heterodyne receiver 8 becomes a sine wave with a fixed period of 1 msec, which shows that the frequency shift of 1 kHz is carried out.

Accordingly, to achieve the frequency shift $(f_{ofs} - f_{move})$ of 50 MHz (= 50000 times 1 kHz) by the optical phase modulator 24, for example, it is seen that the sawtooth wave generator unit 21 generates the sawtooth wave with the amplitude of 7 V and the period T of 20 nsec (= 1 msec/50000).

The pulse signal generator 25 generates the pulse-phase modulation driving signal WF01 for ON/OFF controlling the optical intensity modulator 26.

According to the pulse-phase modulation driving signal WF01 oscillated by the pulse signal generator 25, the optical intensity modulator 26 carries out the pulse modulation of the transmitted seed light with the frequency (v + f_{ofs} - f_{move}) output from the optical phase modulator 24, and outputs the pulsed light to the optical path OF(4).

The pulsed light has the pulse width of several hundred nsec to 1 μsec and the repetition frequency of several to tens of kilohertz.

Receiving the pulsed light from the optical intensity modulator 26 of the modulation unit 4, the optical amplifier 5 amplifies the pulsed light and outputs the pulsed light after the amplification to the optical path OF(5).

More specifically, using the accumulation effect of an amplifying medium, the optical amplifier 5 stores the energy during the OFF period of the pulsed light output from the optical intensity modulator 26 (period during which the signal level of the pulsed light is L level), and releases the energy in the ON period of the pulsed light (period during which the signal level of the pulsed light is H level), thereby optically amplifying the pulsed light.

Receiving the pulsed light after the amplification from the optical amplifier 5, the optical circulator 6 outputs the pulsed light to the optical antenna 7 via the optical path OF (6) .

Receiving the pulsed light from the optical circulator 6, the optical antenna 7 magnifies the beam diameter of the pulsed light to a prescribed beam diameter, followed by emitting the pulsed light in the direction in space the signal processing unit 9 instructs.

The pulsed light emitted from the optical antenna 7 is backscattered by an observation target in the space (when the laser radar device is used as a wind measurement lidar, an aerosol moving at the same speed as the wind speed is the observation target). When the backscattered light of the pulsed light backscattered by the observation target is received by the optical antenna 7, the backscattered light is subjected to the Doppler frequency shift corresponding to the moving speed of the observation target.

Accordingly, as is given by the following Expression (3), the frequency of the backscattered light is equal to the frequency $(\nu + f_{ofs} - f_{move})$ of the pulsed light emitted from the optical antenna 7 plus the Doppler shift frequency $f_{dop}$

corresponding to the moving speed of the observation target and the Doppler shift frequency $f_{move}$ corresponding to the speed of the moving body.

$$(\nu + f_{ofs} - f_{move}) + (f_{dop} + f_{move})$$
$$= \nu + f_{ofs} + f_{dop} \qquad (3)$$

The optical circulator 6 outputs the backscattered light received by the optical antenna 7 to the optical path OF(7).

Receiving the backscattered light with the frequency ($\nu + f_{ofs} + f_{dop}$) received by the optical antenna 7 from the optical circulator 6, the optical heterodyne receiver 8 optically mixes the backscattered light and the local oscillation light with the frequency $\nu$ output from the optical path branching coupler 3 to obtain the beat signal with the difference frequency ($f_{ofs} + f_{dop}$) between the backscattered light and the local oscillation light, carries out photoelectric conversion of the beat signal, and outputs the beat signal which is an electric signal to the signal processing unit 9.

The frequency of the beat signal f obtained by the optical heterodyne receiver 8 is given by the following Expression (4).

$$f = f_{ofs} + f_{dop} \qquad (4)$$

Accordingly, on the assumption that the offset frequency $f_{ofs}$ is 50 MHz, and the Doppler shift frequency $f_{dop}$ corresponding to the moving speed of the observation target (wind speed, for example) is in the range of -50 to +50 MHz, the frequency f of the beat signal becomes intermediate frequency not greater than 100 MHz.

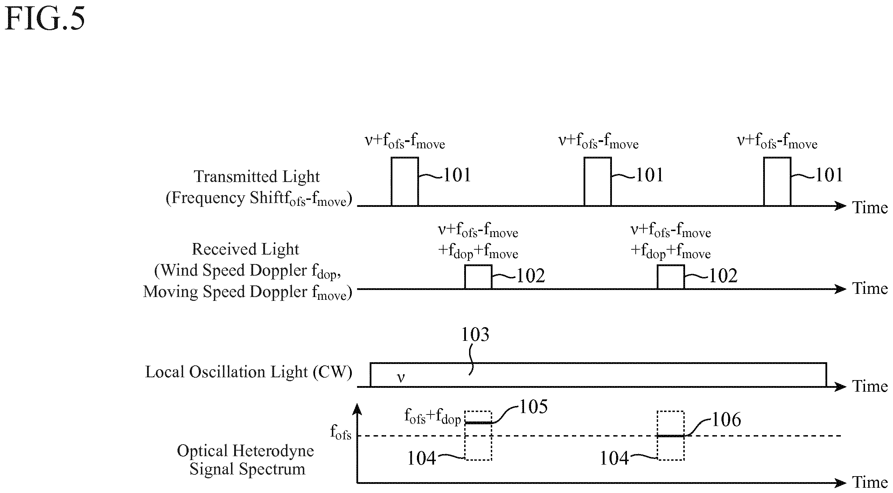

Here, FIG. 5 is a diagram illustrating relationships between the transmitted light (pulsed light emitted from the optical antenna 7), the received light (backscattered light received by the optical antenna 7), and the optical heterodyne signal spectrum (spectrum of the beat signal obtained by the optical heterodyne receiver 8) in the embodiment 1 in accordance with the present invention.

The frequency of the transmitted light 101, which is the pulsed light emitted from the optical antenna 7, is ($\nu + f_{ofs} - f_{move}$), and is repeatedly emitted at the prescribed pulse width. Incidentally, the frequency shift given by the modulation unit 4 is ($f_{ofs} - f_{move}$).

The received light 102 of the optical antenna 7 is the backscattered light of the transmitted light 101, which is backscattered by the observation target, and is continuously collected during the pulse OFF period of the transmitted light 101.

In FIG. 5, although only the received light 102 corresponding to a specific range is drawn for the sake of simplicity, the received light 102 is continuously collected during the pulse OFF period of the transmitted light 101 in practice.

As for the frequency of the received light 102, since the Doppler shift frequency $f_{dop}$ corresponding to the moving speed of the observation target (wind speed, for example) and the Doppler shift frequency $f_{move}$ corresponding to the moving speed of the moving body are added to the original frequency, it is represented by ($\nu + f_{ofs} + f_{dop}$).

On the other hand, the local oscillation light 103 is continuously output from the optical path branching coupler 3, and the frequency of the local oscillation light 103 is equal to the frequency $\nu$ of the transmitted seed light oscillated from the reference light source 2.

The optical heterodyne receiver 8 is a component for optically mixing the received light 102 and the local oscillation light 103 as described above to obtain the beat signal with the difference frequency between the received light 102 and the local oscillation light 103 (beat signal with frequency ($f_{ofs} + f_{dop}$)).

Accordingly, the time series data of the optical heterodyne signal spectrum, which is the spectrum of the beat signal, is obtained as a spectrum detuned by the Doppler shift frequency $f_{dop}$ corresponding to the moving speed of the observation target from the offset frequency $f_{ofs}$ which is the center frequency.

In FIG. 5, the reference numeral 104 designates an existence band of the wind speed Doppler in a specific distance range (frequency range in which the wind speed Doppler is present), 105 designates a peak frequency observed when the Doppler shift frequency $f_{dop}$ corresponding to the moving speed of the observation target (wind speed) is other than zero (wind speed ≠ 0), and 106 designates the peak frequency observed when the Doppler shift frequency $f_{dop}$ corresponding to the moving speed of the observation target is zero (wind speed = 0).

When the wind speed = 0, the center frequency of the beat signal agrees with the offset frequency $f_{ofs}$ which is an intermediate frequency.

In the example of FIG. 5, since it assumes that the transmitted light 101 is ideally turned on and off without any leakage light during the pulse off period, the beat signal obtained by the optical heterodyne receiver 8 does not include any spurious beat component involved in the leakage light.

Accordingly, it is enough for the post-stage signal processing unit 9 to carry out the signal processing by cutting out only the existence band 104 of the wind speed Doppler through a filter.

Receiving the beat signal from the optical heterodyne receiver 8, the signal processing unit 9 calculates a distance L to the observation target as is given by the following Expression (5) from an arrival time Δt (= t2 - t1) which is a time difference between a time t1 at which the pulsed light is emitted from the optical antenna 7 and a time t2 at which the beat signal (beat signal obtained from the backscattered light of the pulsed light emitted at the time t1) is output from the optical heterodyne receiver 8.

$$L = \frac{c\Delta t}{2} \qquad\qquad (5)$$

In Expression (5), c is the velocity of light.

In addition, the signal processing unit 9 carries out the AD conversion of the beat sign al output from the optical heterodyne receiver 8 at a prescribed sampling rate; divides the beat signal which is a digital signal for each receiving gate width corresponding to the pulse width of the pulsed light output from the modulation unit 4; and calculates a power spectrum by performing Fast Fourier Transform of each beat signal after the division.

The signal processing unit 9, calculating the power spectrum of the beat signal for each receiving gate width, calculates the peak value of the power spectrum, its spectral width and its SNR (Signal Noise Ratio), and calculates the moving speed of the observation target from the peak value of the power spectrum.

Incidentally, each receiving gate width (time gate) corresponds to the time from emitting the pulsed light from the optical antenna 7 to receiving the backscattered light, and corresponds to the distance L to the observation target. Accordingly, the distribution of the Doppler shift frequency $f_{dop}$ with regard to the wind speed in the radial direction (emitting direction of the pulsed light) can be obtained for each distance L to the observation target.

The signal processing unit 9 has a function of outputting the command value in the radial direction to the optical antenna 7 so as to control the optical antenna 7, thereby scanning the observation target one-dimensionally or two-dimensionally with the pulsed light.

The signal processing unit 9 stores measured values of the distance L to the observation target and of the wind speed (which is obtained from the peak value of the power spectrum) for each radial direction obtained in accordance with the command value, which makes it possible to estimate three-dimensional distribution of the wind speed by a vector operation, and to calculate the wind direction and speed distribution for each observed distance.

The signal processing unit 9 stores various calculation results in a memory which is an internal data storage, and displays necessary information (such as the moving speed of the observation target (wind speed) and three-dimensional distribution of the wind speed) on the measurement result display unit 10.

As is clear from the above, according to the present embodiment 1, it is configured in such a manner that it comprises the modulation unit 4 for giving to the frequency ν of the transmitted seed light oscillated by the reference light source 2, the frequency ($f_{ofs}$ - $f_{move}$) resulting from subtracting the Doppler shift frequency $f_{move}$ corresponding to the moving speed of the moving body from the offset frequency $f_{ofs}$ which is the preset frequency, and for outputting the pulsed light by carrying out the pulse modulation of the transmitted seed light with the frequency (ν + $f_{ofs}$ - $f_{move}$); and that the optical heterodyne receiver 8 optically mixes the backscattered light with the frequency (ν + $f_{ofs}$ + $f_{dop}$) received by the optical antenna 7 and the local oscillation light with the frequency ν to obtain the beat signal with the difference frequency ($f_{ofs}$ + $f_{dop}$) between the backscattered light and the local oscillation light, carries out the photoelectric conversion of the beat signal, and outputs the beat signal which is an electric signal to the signal processing unit 9. Accordingly, it becomes able to cancel the Doppler shift frequency $f_{move}$ corresponding to the moving speed of the moving body without using a VCO. As a result, it offers an advantage of being able to increase the measurement accuracy of the moving speed of the observation target.

More specifically, since the present embodiment 1 can cancel the Doppler shift frequency $f_{move}$ corresponding to the moving speed of the moving body without providing a VCO, there is no leakage of the fundamental and harmonic signals of the signal oscillated by the VCO into the output side of the optical heterodyne receiver 8. Accordingly, it can prevent the spike noise from appearing on the frequency spectrum of the beat signal obtained from the optical heterodyne receiver 8, thereby being able to increase the measurement accuracy of the moving speed of the observation target.

In addition, the difference frequency components between the harmonic components of the VCO and the beat signal obtained from the optical heterodyne receiver 8 do not appear on the frequency spectrum as a spurious peak, the present embodiment 1 can prevent the deterioration of the measurement accuracy of the moving speed of the observation target involved in the appearance of the spurious peaks.

In addition, according to the present embodiment 1, since it obviates the necessity for mounting a correction circuit for canceling the Doppler shift frequency $f_{move}$ corresponding to the moving speed of the moving body in the domain of handling the electric signal in the post stage of the optical heterodyne receiver 8, it offers an advantage of being able to simplify and downsize the configuration of the laser radar device.

According to the present embodiment 1, since it can stabilize the amplitude of sawtooth wave oscillated by sawtooth wave generator unit 21 even though the moving speed of the moving body varies, it can achieve power saving.

Incidentally, inverting the slope of the sawtooth wave oscillated from the sawtooth wave generator unit 21 makes it possible to cancel the Doppler shift frequency $f_{move}$ corresponding to the moving speed of the moving body even when the direction of travel of the moving body is negative.

EMBODIMENT 2

Although the foregoing embodiment 1 shows an example in which the optical intensity modulator 26 carries out the ideal pulse modulation (the extinction characteristic during the pulse OFF period by the optical intensity modulator 26 is ideal) and hence there is no leakage light during the pulse OFF period, the present embodiment 2 handles a laser radar device capable of increasing the measurement accuracy of the moving speed of the observation target even if leakage light is present in the pulse OFF period because the pulse modulation in the optical intensity modulator 26 is not necessarily ideal (extinction characteristic in the pulse OFF period by the optical intensity modulator 26 is not ideal).

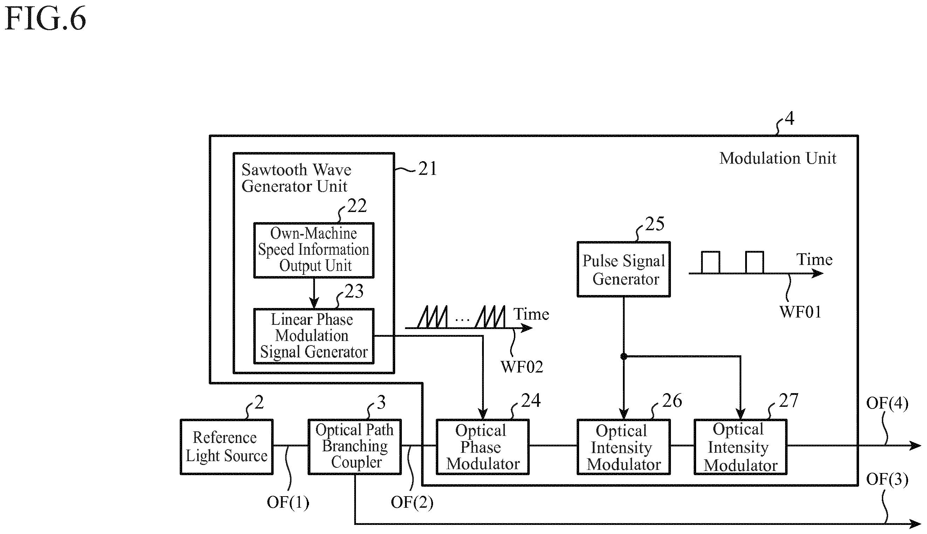

FIG. 6 is a block diagram showing a configuration of an optical transmitter unit 1 of a laser radar device of the embodiment 2 in accordance with the present invention. In FIG. 6, the same reference numerals as those of FIG. 2 designate the same or like components, and their description will be omitted.

The present embodiment 2 is configured in such a manner that two optical intensity modulators 26 and 27 are connected in cascade, and the two optical intensity modulators 26 and 27 are driven synchronously by the pulse-phase modulation driving signal WF01 generated by the pulse signal generator 25.

Next, the operation will be described.

Here, since it is the same as the foregoing embodiment 1 except for the two optical intensity modulators 26 and 27 connected in cascade, only the different portion from the foregoing embodiment 1 will be described.

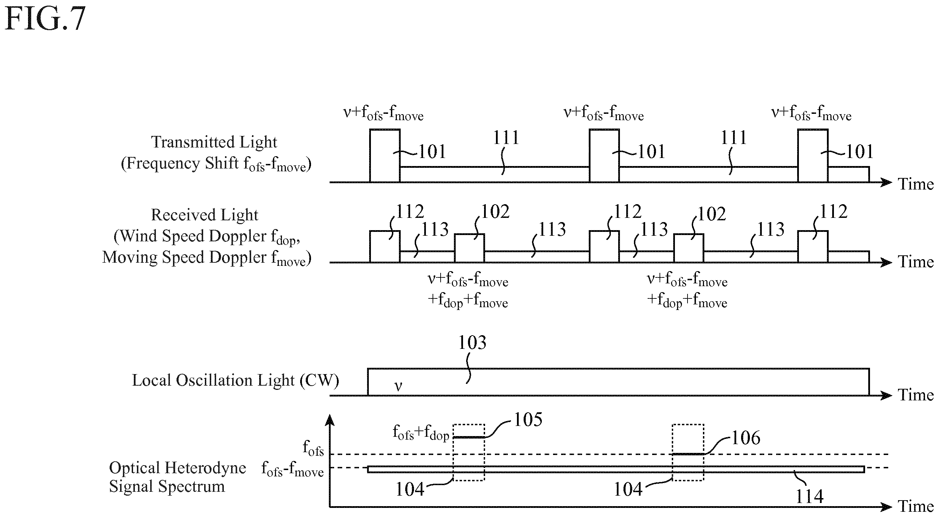

FIG. 7 is a diagram illustrating relationships between the transmitted light, received light and optical heterodyne signal spectrum when the extinction characteristic during the pulse OFF period by the optical intensity modulator 26 is not ideal.

The transmitted light 101 which is the pulsed light emitted from the optical antenna 7 has the frequency ($\nu$ + $f_{ofs}$ - $f_{move}$), and is repeatedly emitted at the prescribed pulse width as in the foregoing embodiment 1.

The transmitted light 101 is emitted during the ON period of the pulse-phase modulation driving signal WF01 generated by the pulse signal generator 25 (the period during which the pulse signal generator 25 outputs the pulse signal, which is referred to as "pulse ON period" from now on). However, during the OFF period of the pulse-phase modulation driving signal WF01 (the period during which the pulse signal generator 25 does not output the pulse signal, which is referred to as "pulse OFF period" from now on), since the extinction characteristic during the pulse OFF period by the optical intensity modulator 26 is not ideal, a leakage light component 111 is output from the optical intensity modulator 26.

The leakage light component 111 is amplified by the post-stage optical amplifier 5, and is output from the optical circulator 6.

As a result, a crosstalk component from the optical path OF (5) to the optical path OF (7) in the optical circulator 6 enters the optical heterodyne receiver 8. In addition, during the pulse ON period, a crosstalk component 112 of the transmitted light 101 fed into the receiving optical path due to the reflection by internal parts of the optical antenna 7 enters the optical heterodyne receiver 8; and during the pulse OFF period, leakage light 113 enters the optical heterodyne receiver 8 as leakage light into the receiving optical path due to the leakage light component 111.

The leakage light 113 into the receiving optical path has the same frequency ($\nu$ + $f_{ofs}$ - $f_{move}$) as the transmitted light 101 during the pulse ON period.

Accordingly, the leakage light 113 into the receiving optical path interferes with the local oscillation light 103 in the optical heterodyne receiver 8, thereby generating a spurious beat signal 114.

The spurious beat signal 114 has the frequency equal to the difference frequency ($f_{ofs}$ - $f_{move}$) between the leakage light 113 into the receiving optical path and the local oscillation light 103, and the spurious beat signal 114 exists continuously.

On the other hand, in the optical heterodyne signal spectrum which is the spectrum of the beat signal obtained by the optical heterodyne receiver 8, since the peak frequency 105 or 106 of the Doppler shift frequency $f_{dop}$ corresponding to the moving speed of the observation target coincides with the spurious beat signal 114, it is difficult to detect only the peak frequency 105 or 106 of the Doppler shift frequency $f_{dop}$ corresponding to the moving speed of the observation target directly.

Since the frequency ($f_{ofs}$ - $f_{move}$) of the spurious beat signal 114 is intermediate frequency, it is difficult to perform the speed measurement equivalent to that of the moving body equipped with the laser radar device.

Accordingly, the present embodiment 2 is configured in such a manner that it has two optical intensity modulators 26 and 27 connected in cascade, and that the two optical intensity modulators 26 and 27 are driven synchronously by the pulse-phase modulation driving signal WF01 generated by the pulse signal generator 25. This makes it possible to suppress the leakage light 113 during the pulse OFF period caused by the optical intensity modulator 26.

Driving the optical intensity modulators 26 and 27 synchronously makes it possible to synchronize the pulse OFF period by the optical intensity modulator 26 with the pulse OFF period by the optical intensity modulator 27. Thus, the present embodiment 2 can improve the extinction characteristic during the pulse OFF period as compared with the case where the single optical intensity modulator 26 only is provided.

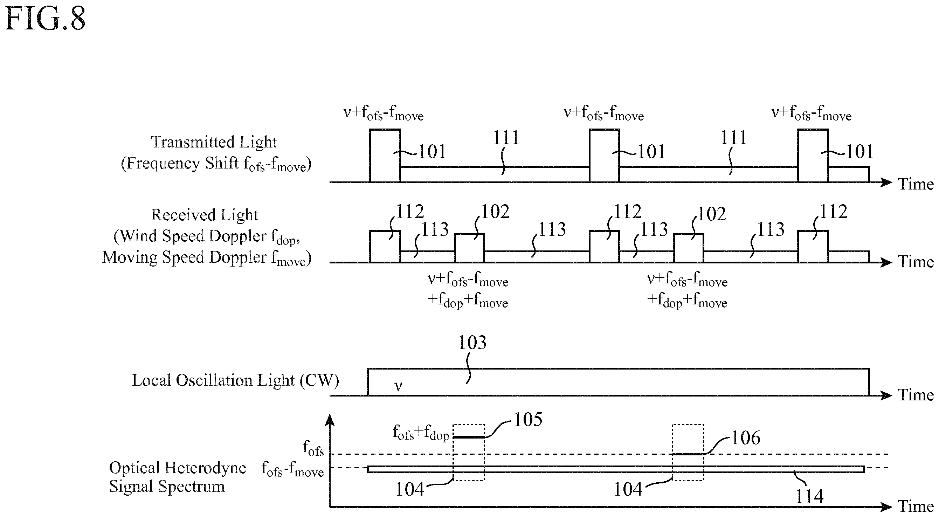

FIG. 8 is a diagram illustrating relationships between the transmitted light, received light and optical heterodyne signal spectrum when the optical intensity modulators 26 and 27 are driven synchronously.

Since the optical intensity modulator 27 suppresses the leakage light 113 due to the optical intensity modulator 26 during the pulse OFF period (in FIG. 8, the leakage light 113 is suppressed in the pulse OFF period), the crosstalk component 112 of the transmitted light 101 into the receiving optical path during the pulse ON period and the received light component (received light 102) passing through the Doppler shift by the moving speed of the observation target are obtained as the received light.

Thus, as a result that the optical heterodyne receiver 8 mixes the received light with the local oscillation light 103, the signal spectrum has as its components only the beat component (spurious beat signal 115) between the crosstalk component 112 of the transmitted light 101 and the local oscillation light 103 in the pulse ON period, and the Doppler component due to the moving speed of the observation target (the peak frequency 105 and 106 of the Doppler shift frequency $f_{dop}$ and the existence band 104 of the wind speed Doppler).

As for the beat component (spurious beat signal 115) between the crosstalk component 112 of the transmitted light 101 and the local oscillation light 103 in the pulse ON period, since it corresponds to a spurious signal at the distance 0 m in the observation by the laser radar device, it can be rejected by considering its time.

Since the present embodiment 2 can suppress the spurious beat signal 115 in the optical heterodyne signal spectrum during the pulse OFF period in which the observation target is to be observed, it can detect the Doppler shift frequency $f_{dop}$ corresponding to the moving speed of the observation target accurately.

Although the present embodiment 2 shows an example in which the two optical intensity modulators 26 and 27 are connected in cascade, a configuration is also possible in which three or more optical intensity modulators are connected in cascade and are driven synchronously by the pulse-phase modulation driving signal WF01 generated by the pulse signal generator 25, and it will be able to further improve the extinction characteristic in the pulse OFF period.

As the optical intensity modulator 27, whichever unit can be used as long as it is able to respond to the pulse width of 100 nsec to 1 $\mu$sec required for the laser radar device, and to the repetition frequency of several to tens of kHz just as the optical intensity modulator 26. For example, it is possible to use an intensity modulator such as a Mach-Zehnder LN modulator and an EA modulator, or an optical amplifier such as a semiconductor optical amplifier or an optical fiber amplifier, or an optical switch such as an MEMS optical switch.

Using the semiconductor optical amplifier or optical fiber amplifier among them will enable the gain of the optical amplification to compensate for the insertion loss during the pulse ON period which is increased owing to the multistage connection.

EMBODIMENT 3

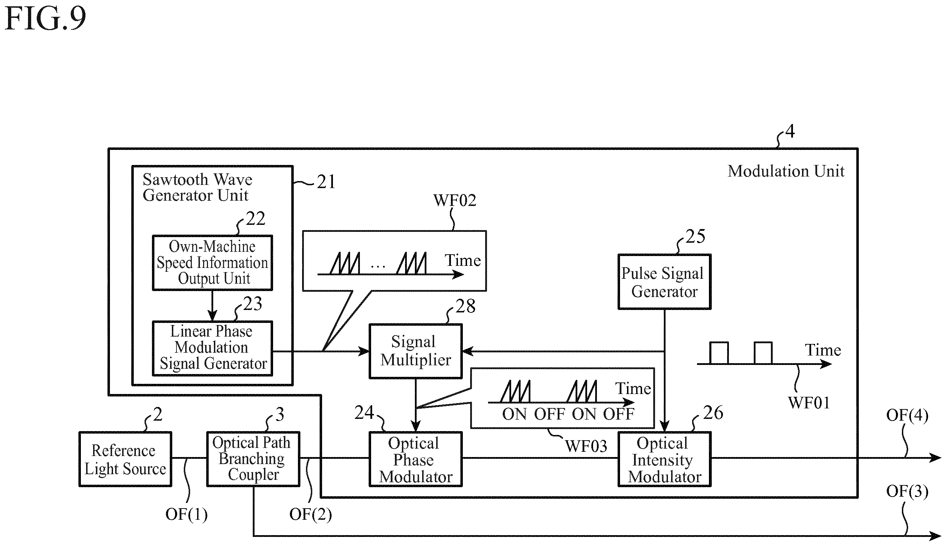

FIG. 9 is a block diagram showing a configuration of the optical transmitter unit 1 of the laser radar device of an embodiment 3 in accordance with the present invention. In FIG. 9, since the same reference numerals as those of FIG. 2 designate the same or like components, their description will be omitted.

A signal multiplier 28 multiplies the sawtooth wave oscillated by the sawtooth wave generator unit 21 by the pulse-phase modulation driving signal WF01 generated by the pulse signal generator 25, thereby executing the processing of providing the optical phase modulator 24 with the sawtooth wave, which is oscillated by the sawtooth wave generator unit 21, only during the ON period of the pulse-phase modulation driving signal WF01 (during the period when the pulse signal is output). Incidentally, the signal multiplier 28 constitutes a sawtooth wave cutting-out unit.

Although the foregoing embodiment 1 shows an example in which the linear phase modulation signal generator 23 of the sawtooth wave generator unit 21 outputs the continuous sawtooth wave WF02 to the optical phase modulator 24, a configuration is also possible in which the signal multiplier 28 multiplies the sawtooth wave WF02 oscillated by the sawtooth wave generator unit 21 by the pulse-phase modulation driving signal WF01 generated by the pulse signal generator 25 to convert the continuous sawtooth wave WF02 to a burst sawtooth wave WF03 (discrete sawtooth wave), and outputs the burst sawtooth wave WF03 to the optical phase modulator 24.

In this way, the optical phase modulator 24, being driven by the burst sawtooth wave WF03, carries out the phase modulation of the transmitted seed light with the frequency $\nu$ output from the optical path branching coupler 3. Thus, it shifts the frequency of the transmitted seed light only during the ON period of the pulse-phase modulation driving signal WF01 generated by the pulse signal generator 25, and outputs the transmitted seed light with the frequency ($v$ + $f_{ofs}$ - $f_{move}$) to the optical intensity modulator 26.

Accordingly, during the OFF period of the pulse-phase modulation driving signal WF01 generated by the pulse signal generator 25, the optical phase modulator 24 does not shift the frequency of the transmitted seed light, thereby outputting the transmitted seed light with the frequency $v$ to the optical intensity modulator 26.

In this way, the optical phase modulator 24 does not carry out the frequency shift ($f_{ofs}$ - $f_{move}$) of the transmitted seed light during the OFF period of the pulse-phase modulation driving signal WF01. In addition, since it does not carry out the frequency shift ($f_{ofs}$ - $f_{move}$) of the leakage light which is present during the OFF period of the pulse signal, it can improve the extinction characteristic in the pulse OFF period.

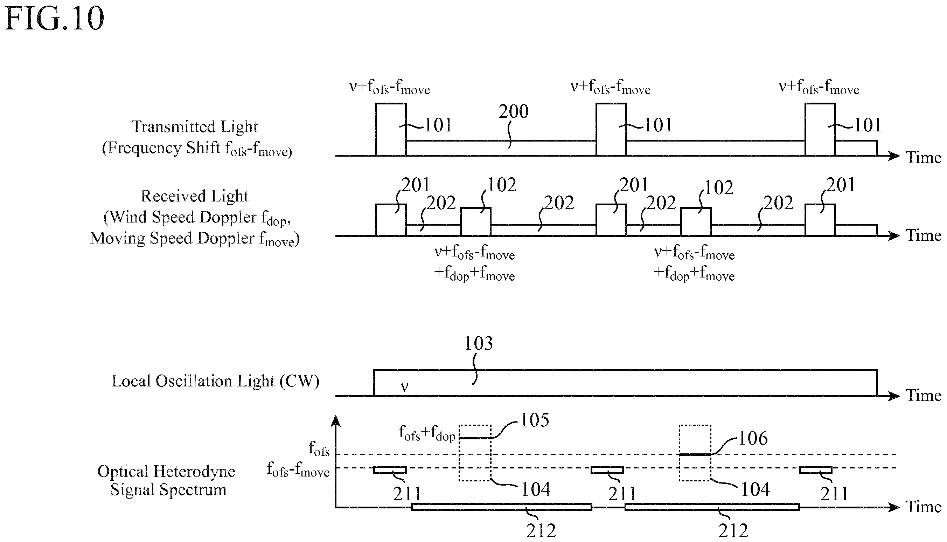

FIG. 10 is a diagram illustrating relationships between the transmitted light, received light and optical heterodyne signal spectrum in the embodiment 3 in accordance with the present invention.

As shown in FIG. 10, during the ON period of the pulse-phase modulation driving signal WF01 generated by the pulse signal generator 25, the transmitted light 101 which is the pulsed light is output from the optical intensity modulator 26 to the optical path OF(4). In contrast, during the OFF period of the pulse-phase modulation driving signal WF01, it is not output, but a component 200 of leakage light is output to the optical path OF(4).

The component 200 of leakage light is amplified by the post-stage optical amplifier 5 and is output to the optical circulator 6.

As a result, the crosstalk component from the optical path OF (5) to the optical path OF (7) of the optical circulator 6 enters the optical heterodyne receiver 8. More specifically, during the pulse ON period, a crosstalk component 201 of the transmitted light 101 reflected from the internal components of the optical antenna 7 into the receiving optical path enters the optical heterodyne receiver 8, and during the pulse OFF period, leakage light 202 enters the optical heterodyne receiver 8 as leakage light into the receiving optical path owing to the component 200 of leakage light.

Although the crosstalk component 201 into the receiving optical path during the pulse ON period has the frequency ($v$ + $f_{ofs}$ - $f_{move}$) equal to the frequency of the transmitted light 101 during the pulse ON period, the leakage light 202 into the receiving optical path during the pulse OFF period has the frequency $v$ because the frequency shift ($f_{ofs}$ - $f_{move}$) is not performed during the pulse OFF period.

As a result, a spurious beat signal 211 occurs in the optical heterodyne receiver 8 owing to the interference between the crosstalk component 201 into the receiving optical path during the pulse ON period and the local oscillation light 103.

The spurious beat signal 211 appears at the intermediate frequency ($f_{ofs}$ - $f_{move}$) only during the pulse ON period.

On the other hand, in the time period (pulse OFF period) for observing the Doppler shift frequency $f_{dop}$ corresponding to the moving speed of the observation target, since the frequency ($f_{ofs}$ + $f_{dop}$) of the Doppler component corresponding to the moving speed of the observation target (the peak frequency 105 or 106 of the Doppler shift frequency $f_{dop}$, and the existence band 104 of the wind speed Doppler) is separated apart from the spurious beat signal 212 on the spectrum, the Doppler component corresponding to the moving speed of the observation target is separable from the spurious beat signal 212 electrically.

As is clear from the above, according to the present embodiment 3, it is configured in such a manner that the signal multiplier 28 provides the optical phase modulator 24 with the sawtooth wave oscillated by the sawtooth wave generator unit 21 only during the ON period of the pulse-phase modulation driving signal WF01 generated by the pulse signal generator 25. Accordingly, it offers an advantage of being able to separate the Doppler component corresponding to the moving speed of the observation target easily from the spurious beat signal 211 or 212 on the spectrum, even when the extinction characteristic in the pulse OFF period by the optical intensity modulator 26 is not ideal (when the pulse ON/OFF is incomplete).

In addition, since it is able to relax the performance requirements for the extinction characteristic during the pulse OFF period by the optical intensity modulator 26, it offers an advantage of being able to reduce the cost.

Furthermore, according to the present embodiment 3, since the plurality of optical intensity modulators need not be connected in cascade as in the foregoing embodiment 2, it can avoid the increase in the insertion loss involved in the cascade connection of the plurality of optical intensity modulators, thereby being able to reduce the power consumption.

Incidentally, it is to be understood that a free combination of the individual embodiments, variations of any components of the individual embodiments or removal of any components of the individual embodiments is possible within the scope of the present invention.

INDUSTRIAL APPLICABILITY

A laser radar device in accordance with the present invention is suitable for a wind measurement lidar that must measure the moving speed of an observation target (aerosol, for example) in space at high accuracy.

REFERENCE SIGNS LIST

1 optical transmitter unit; 2 reference light source; 3 optical path branching coupler; 4 modulation unit (pulsed light output unit); 5 optical amplifier; 6 optical circulator; 7 optical antenna; 8 optical heterodyne receiver; 9 signal processing unit (moving speed calculating unit) ; 10 measurement result display unit; 21 sawtooth wave generator unit; 22 own-machine speed information output unit; 22an own-machine speed measuring unit (speed measuring unit) ; 22b speed-sawtooth wave period information converter; 23 linear phase modulation signal generator (sawtooth wave generating unit); 24 optical phase modulator (phase modulation unit); 25 pulse signal generator (pulse signal generating unit); 26, 27 optical intensity modulator (pulse modulation unit); 28 signal multiplier (sawtooth wave cutting-out unit); 101 transmitted light (pulsed light) ; 102 received light (backscattered light) ; 103 local oscillation light; 104 existence band of wind speed Doppler; 105 peak frequency observed at wind speed $\neq$ 0; 106 peak frequency observed at wind speed = 0; 111 component of leakage light; 112 crosstalk component to receiving optical path; 113 leakage light to receiving optical path; 114, 115 spurious beat signal; 201 crosstalk component to receiving optical path; 202 leakage light to receiving optical path; 211, 212 spurious beat signal.

**Claims**

1. A laser radar device comprising:

   a light source (2) to oscillate transmitted seed light;
   a speed measuring unit (22) to measure a speed of a moving body in which the own device is mounted;
   a sawtooth wave generator (21) to generate a sawtooth wave with a period corresponding to a difference between a preset frequency and a Doppler shift frequency corresponding to the speed measured by the speed measuring unit;
   a pulse signal generator (25) to generate a pulse signal repeatedly ;
   a sawtooth wave cutting-out unit (28) to output the sawtooth wave generated by the sawtooth generator (21) only in a period during which the pulse signal generator (25) generates the pulse signal;
   a phase modulator (24) to shift a frequency of the transmitted seed light by performing phase modulation of the transmitted seed light in accordance with the sawtooth wave provided by the sawtooth wave cutting-out unit (28);
   a pulse modulator (26, 27) to output pulsed light by performing pulse modulation of the transmitted seed light in accordance with the pulse signal generated by the pulse signal generator (25);
   an optical antenna (7) to emit the pulsed light which is the transmitted seed light whose frequency is shifted by the phase modulator (24), the transmitted seed light being pulse-modulated by the pulse modulator (26, 27), into space, and thereafter to receive backscattered light of the pulsed light, which is backscattered by an observation target in the space;
   an optical heterodyne receiver (8) to mix the backscattered light received by the optical antenna (7) with the transmitted seed light oscillated by the light source (2), and to output a beat signal with a difference frequency between the backscattered light and the transmitted seed light; and
   a moving speed calculator (9) to calculate a moving speed of the observation target from the beat signal output from the optical heterodyne receiver (8).

2. The laser radar device according to claim 1, wherein
   a plurality of the pulse modulators (26, 27) are connected in a cascade, and the plurality of the pulse modulators (26, 27) are driven synchronously in response to the pulse signal generated by the pulse signal generator (25).

3. The laser radar device according to claim 1, further comprising:
   an optical amplifier (5) to amplify the pulsed light whose frequency is shifted by the phase modulator (24), and to output the pulsed light after the amplification to the optical antenna (7) .

**Patentansprüche**

1. Laserradareinrichtung, umfassend:

   eine Lichtquelle (2), um transmittiertes Anregungslicht zu oszillieren;
   eine Geschwindigkeitsmesseinheit (22), um eine Geschwindigkeit eines sich bewegenden Körpers, in dem eine eigene Einrichtung angeordnet ist, zu messen;

einen Sägezahnwellenerzeuger (21), um eine Sägezahnwelle mit einer Periode entsprechend einer Differenz zwischen einer voreingestellten Frequenz und einer Dopplerverschiebungsfrequenz zu erzeugen entsprechend der durch die Geschwindigkeitsmesseinheit gemessenen Geschwindigkeit;

einen Pulssignalerzeuger (25), um ein Pulssignal wiederholt zu erzeugen;

eine Sägezahnwellenausschneideeinheit (28), um die durch den Sägezahnwellenerzeuger (21) erzeugte Sägezahnwelle nur in einer Periode auszugeben, während der der Pulssignalerzeuger (25) das Pulssignal erzeugt;

einen Phasenmodulator (24), um eine Frequenz des transmittierten Anregunglichts durch Durchführen von Phasenmodulation des transmittierten Anregungslichts zu verschieben gemäß der durch die Sägezahnwellenausschneideeinheit (28) bereitgestellten Sägezahnwelle;

einen Pulsmodulator (26, 27), um gepulstes Licht auszugeben durch Durchführen von Pulsmodulation des transmittierten Anregungslichts gemäß dem durch den Pulssignalerzeuger (25) erzeugten Pulssignal;

eine optische Antenne (7), um das gepulste Licht, das das transmittierte Anregungslicht ist, dessen Frequenz durch den Phasenmodulator (24) verschoben wird, wobei das transmittierte Anregungslicht durch den Pulsmodulator (26, 27) pulsmoduliert wird, in die Umgebung abzugeben, und um danach zurückgestreutes Licht des gepulsten Lichts, das durch ein Beobachtungsziel in die Umgebung zurückgestreut wird, zu empfangen;

einen optischen Heterodynempfänger (8), um das von der optischen Antenne (7) empfangene zurückgestreute Licht mit dem durch die Lichtquelle (2) oszillierten transmittierten Anregungslicht zu mischen und ein Schwebungssignal mit einer Differenzfrequenz zwischen dem zurückgestreuten Licht und dem transmittierten Anregungslicht auszugeben; und

einen Bewegungsgeschwindigkeitsberechner (9), um eine Bewegungsgeschwindigkeit des Beobachtungsziels aus dem Schwebungssignal zu berechnen, das vom optischen Heterodynempfänger (8) ausgegeben wurde.

2. Laserradareinrichtung nach Anspruch 1, wobei:
eine Vielzahl der Pulsmodulatoren (26, 27) in einer Kaskade verbunden sind, und die Vielzahl der Pulsmodulatoren (26, 27) in Antwort auf das durch den Pulssignalerzeuger (25) erzeugte Pulssignal synchron angetrieben werden.

3. Laserradareinrichtung nach Anspruch 1, ferner umfassend:
einen optischen Verstärker (5), um das gepulste Licht zu verstärken, dessen Frequenz durch den Phasenmodulator (24) verschoben wird, und um das gepulste Licht nach der Verstärkung an die optische Antenne (7) auszugeben.

## Revendications

1. Dispositif radar à laser comprenant :

une source de lumière (2) destinée à faire osciller une lumière d'amorce transmise ;

une unité de mesure de la vitesse (22) destinée à mesurer la vitesse d'un corps mobile dans lequel est monté le propre dispositif ;

un générateur d'onde en dent de scie (21) destiné à générer une onde en dent de scie avec une période correspondant à une différence entre une fréquence préréglée et une fréquence d'effet Doppler correspondant à la vitesse mesurée par l'unité de mesure de la vitesse ;

un générateur de signal impulsionnel (25) destiné à générer un signal impulsionnel à plusieurs reprises ;

une unité de coupure de l'onde en dent de scie (28) destinée à délivrer en sortie l'onde en dent de scie générée par le générateur d'onde en dent de scie (21) seulement dans une période au cours de laquelle le générateur de signal impulsionnel (25) génère le signal impulsionnel ;

un modulateur de phase (24) destiné à décaler la fréquence de la lumière d'amorce transmise, en exécutant une modulation de phase de la lumière d'amorce transmise selon l'onde en dent de scie fournie par l'unité de coupure de l'onde en dent de scie (28) ;

un modulateur d'impulsion (26, 27) destiné à délivrer en sortie une lumière pulsée en exécutant une modulation d'impulsion de la lumière d'amorce transmise selon le signal impulsionnel généré par le générateur de signal impulsionnel (25) ;

une antenne optique (7) destinée à émettre la lumière pulsée qui est la lumière d'amorce transmise dont la fréquence est décalée par le modulateur de phase (24), la lumière d'amorce transmise étant modulée en impulsion par le modulateur d'impulsion (26, 27), dans l'espace, et à recevoir ensuite la lumière rétrodiffusée de la lumière pulsée, qui est rétrodiffusée par une cible d'observation dans l'espace ;

un récepteur hétérodyne optique (8) destiné à mélanger la lumière rétrodiffusée reçue par l'antenne optique (7) avec la lumière d'amorce transmise mise en oscillation par la source de lumière (2), et à délivrer en sortie un signal de battement avec une fréquence différence entre la lumière rétrodiffusée et la lumière d'amorce transmise ; et
un calculateur de la vitesse de déplacement (9) destiné à calculer la vitesse de déplacement de la cible d'observation à partir du signal de battement délivré en sortie par le récepteur hétérodyne optique (8).

2. Dispositif radar à laser selon la revendication 1, où
une pluralité de modulateurs d'impulsion (26, 27) sont connectés en cascade, et la pluralité de modulateurs d'impulsion (26, 27) sont commandés de manière synchrone en réponse au signal d'impulsion généré par le générateur de signal impulsionnel (25).

3. Dispositif radar à laser selon la revendication 1, comprenant en outre
un amplificateur optique (5) destiné à amplifier la lumière pulsée dont la fréquence est décalée par le modulateur de phase (24), et à délivrer en sortie à l'antenne optique (7), la lumière pulsée après l'amplification.

# FIG.1

Optical Transmitter Unit — 1

| Reference Light Source (2) | OF(1) $\nu$ | Optical Path Branching Coupler (3) | OF(2) | Modulation Unit (4) | $\nu+f_{ofs}-f_{move}$ | Optical Amplifier (5) | Optical Circulator (6) | OF(6) | Optical Antenna (7) |
|---|---|---|---|---|---|---|---|---|---|

Transmitted Light

Measurement Target Scattered Light

OF(3) $\nu$

OF(4)

OF(5)

| Measurement Result Display Unit (10) | Signal Processing Unit (9) | $f_{ofs}+f_{dop}$ | Optical Heterodyne Receiver (8) | $\nu+f_{ofs}-f_{move}$ $+f_{dop}+f_{move}$ |
|---|---|---|---|---|

OF(7)

FIG.2

EP 3 156 823 B1

# FIG.3

21

**Sawtooth Wave Generator Unit**

| 22a | 22b | 23 |
|---|---|---|
| Own-Machine Speed Measuring Unit | Speed-Sawtooth Wave Period Information Converter | Linear Phase Modulation Signal Generator |

# FIG.4

# FIG.5

Transmitted Light
(Frequency Shift $f_{ofs}-f_{move}$)

$\nu+f_{ofs}-f_{move}$    ~101    $\nu+f_{ofs}-f_{move}$    ~101    $\nu+f_{ofs}-f_{move}$    ~101    Time

Received Light
(Wind Speed Doppler $f_{dop}$,
Moving Speed Doppler $f_{move}$)

$\nu+f_{ofs}-f_{move}$ $+f_{dop}+f_{move}$    ~102    $\nu+f_{ofs}-f_{move}$ $+f_{dop}+f_{move}$    ~102    Time

Local Oscillation Light (CW)    103    $\nu$    Time

Optical Heterodyne
Signal Spectrum

$f_{ofs}$    $f_{ofs}+f_{dop}$    ~105    ~106    104~    104~    Time

EP 3 156 823 B1

# FIG.6

# FIG.7

Transmitted Light
(Frequency Shift $f_{ofs}-f_{move}$)

$v+f_{ofs}-f_{move}$ ~101 111 $v+f_{ofs}-f_{move}$ ~101 111 $v+f_{ofs}-f_{move}$ ~101

→ Time

Received Light
(Wind Speed Doppler $f_{dop}$,
Moving Speed Doppler $f_{move}$)

112 113 102 113 112 113 102 113 112

→ Time

$v+f_{ofs}-f_{move}$
$+f_{dop}+f_{move}$

$v+f_{ofs}-f_{move}$
$+f_{dop}+f_{move}$

Local Oscillation Light (CW)

103

$v$

→ Time

Optical Heterodyne
Signal Spectrum

$f_{ofs}+f_{dop}$ 105

$f_{ofs}$
$f_{ofs}-f_{move}$

104 104 106 114

→ Time

EP 3 156 823 B1

# FIG.8

Transmitted Light
(Frequency Shift $f_{ofs}-f_{move}$)

$v+f_{ofs}-f_{move}$   $v+f_{ofs}-f_{move}$   $v+f_{ofs}-f_{move}$

101   111   101   111   101   Time

Received Light
(Wind Speed Doppler $f_{dop}$,
Moving Speed Doppler $f_{move}$)

112   102   112   102   112
113   113   113   113   Time

$v+f_{ofs}-f_{move}$   $v+f_{ofs}-f_{move}$
$+f_{dop}+f_{move}$   $+f_{dop}+f_{move}$

Local Oscillation Light (CW)

103

$v$   Time

Optical Heterodyne
Signal Spectrum

$f_{ofs}+f_{dop}$   105
$f_{ofs}$
$f_{ofs}-f_{move}$   106
104   104   114   Time

EP 3 156 823 B1

# FIG.9

# FIG.10

**EP 3 156 823 B1**

**REFERENCES CITED IN THE DESCRIPTION**

**Patent documents cited in the description**

- JP 11147741989 B
- JP 2003240852 A